# EUROPEAN PATENT APPLICATION

(11) **EP 1 056 265 A2**
(43) Date of publication of application: **29.11.2000**
(21) Application number: 00304062.3
(22) Date of filing: 15.05.2000
(51) Int. Cl.: H04M 3/533

(54) **Voice message search system and method**

(30) Priority: 26.05.1999 US 318890
(71) Applicant: LUCENT TECHNOLOGIES INC., Murray Hill, New Jersey 07974-0636 (US)
(72) Inventor: Yaker, Rhoda, Annandale, New Jersey 08801 (US)
(74) Representative: Buckley, Christopher Simon Thirsk

(57) **Abstract**

A desired voice mail message is efficiently retrieved from a storage unit based upon a voice recognition search of a user-specified keyword when there are a plurality of voice mail messages to be heard. The user-specified keyword is inputted as a voice command.

## Description

### Field Of The Invention

This invention is related to telephone voice mail message systems.

### Background

Voice mail messages are a convenient way to communicate when a receiving party is not available at the time of calling. However, when a large number of messages are left for the receiving party, the user has to sequentially listen to each of the messages until a desired message is retrieved. For example, even though the user expects an important message, if twenty messages are stored before the important message, the user has to listen to the twenty messages before she gets to the desired message.

### Summary Of The Invention

In order to solve the above and other problems, according to one aspect of the current invention, a method of retrieving voice mail message(s) from a memory containing data corresponding to one or more voice mail messages, includes the steps of: a) receiving as input a spoken keyword; b) searching for the keyword in each of the voice mail messages; and c) outputting the voice mail message(s) containing the keyword.

According to a second aspect of the current invention, a system for retrieving the voice mail message(s) includes a data storage unit such as a voice mailbox for storing voice mail messages; a voice data input/output unit connected to the storage unit for retrieving the desired voice mail message(s), a voice data searching unit connected to the voice data input/output unit for searching for the desired voice mail message(s) containing a user-defined keyword in a predetermined format; a voice mail control unit connected to the voice data input and output unit and the voice data searching unit for controlling the voice data input/output unit as well as the voice data searching unit, the voice mail control unit prompting for the user-defined keyword and outputting the user-defined keyword in the predetermined format to the voice data searching unit, in response to the voice data searching unit, the voice mail control unit outputting the desired voice mail message(s).

### Brief Description Of The Drawings

Figure 1 is a block diagram illustrating a voice mail system for retrieving the message(s) based upon a spoken keyword according to the current invention.
Figure 2 is a flowchart illustrating steps of retrieving the voice message(s) based upon a spoken keyword search using voice recognition according to the current invention.
Figure 3 is a flowchart illustrating steps of an alternative process of retrieving the voice message(s) based upon a spoken keyword search according to the current invention.

### Detailed Description Of Preferred Embodiments

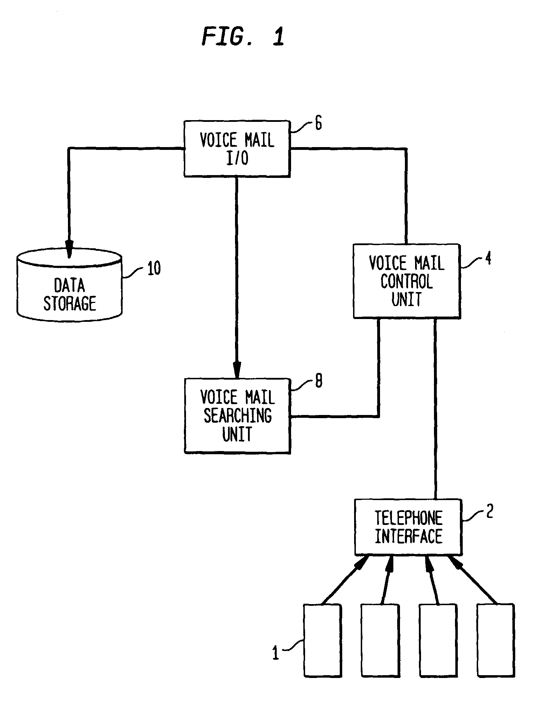

Referring to Figure 1, one preferred embodiment of the voice mail system according to the current invention is illustrated in a block diagram. Telephones 1 access the voice mail system according the current invention via telephone lines. The telephone lines are connected to a telephone interface unit 2, which is connected to a voice mail control unit 4. The telephone interface unit 2 handles the processing of incoming and outgoing telephone calls. When the voice mail message system is accessed, the line is connected to a voice mail control unit 4.

A core portion of the voice mail system of FIGURE 1 includes the voice mail control unit 4 for controlling the flow of activating and deactivating other components; a data storage or memory unit such as a voice mail box 10 for storing one or more voice mail messages for each voice mail user; a voice mail input and output unit 6 for reading and writing the voice mail messages; and a voice mail message searching unit 8 for searching for a specified keyword in each voice mail message. The voice mail control unit 4 performs a password matching process to ascertain that a user has a bona fide access to a particular voice mailbox where messages are kept. Upon positively confirming the access, the voice mail control unit 4 prompts a user for activating a keyword search for retrieving voice mail message(s) containing a user-specified keyword. If the user responds affirmatively, the voice mail control unit 4 activates the voice mail searching unit 8 with the user-specified keyword which is inputted via voice. The voice mail searching unit 8 searches for the user-inputted keyword in the stored data representing the voice mail messages for the user via the voice mail I/O unit 6 using voice recognition techniques. Implementations of the search engine for voice recognition are seen in known conventional conversant systems. When there is a hit or a match for the keyword, the voice mail message searching unit 8 returns identifiers for the message(s) containing the keyword to the voice mail control unit 4, and the voice mail control unit 4 retrieves the entire message(s) via the voice message I/O unit 6 for outputting to the telephone interface unit 2.or speaker if a computer is used. In case of the multiple hits or matches, one implementation of the voice mail control unit 4 retrieves those voice mail messages in a "time stamped" sequence. On the other hand, in response to a negative response to a search key prompt, the voice mail control unit 4 sequentially retrieves the voice mail messages or prompts for another keyword search. The voice mail control unit 4 is also capable of handling other processes including the deletion of the retrieved messages and the placement of new messages in the data storage unit 10.

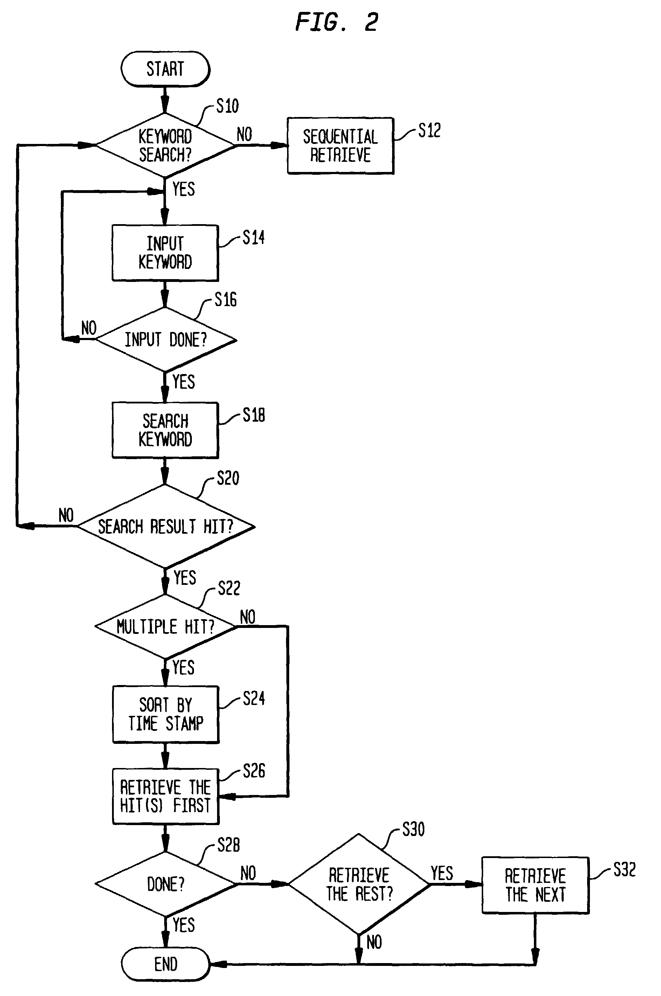

Now referring to Figure 2, a flow chart illustrates steps involved in one preferred process of retrieving a keyword-searched voice mail message according to the current invention. In step S10, a user is prompted whether or not a keyword search is desired after the user is informed of a number of unheard messages by the voice mail control unit 4 of Figure 1. If the user negatively responds to the prompt, the unheard messages are retrieved in a sequential manner. The user listens to each of the messages in a prescribed manner in step S12. On the other hand, if the user affirmatively responds to the keyword search prompt in step S10, the user is asked to input keyword such as the name of a sender who left the message or a subject matter of the message in a step S14. The keyword is generally inputted as a spoken word via an input unit such as a telephone or a microphone if a computer is used. The keyword input step S14 is repeated until confirmed in confirmation step S16. When the keyword is confirmed in step S16, the search is performed based on voice recognition or data matching in a step S18 by the voice mail searching unit 8 of Figure 1.

Still referring to Figure 2, the search result in step S20 determines the flow of the subsequent steps. If there is no match of the keyword, the preferred process prompts the user whether or not an additional search is desired in step S10. On the other hand, if there is at least one match or hit of the keyword, step S22 determines whether or not there is a plurality of hits or matches. In case of multiple hits, the messages are sorted by a user-selected manner such as an ascending or descending chronological order based upon the time stamp of the messages in step S24. The one or more messages are then retrieved and played sequentially to the user in step S26. After these messages are heard, step S28 prompts the user whether or not he or she would like to finish the current session. If the user would like to continue the session, the user is asked whether or not he or she would like to retrieve the rest of the unheard messages in step S30 and step S32 retrieves the remaining messages or to do another keyword search.

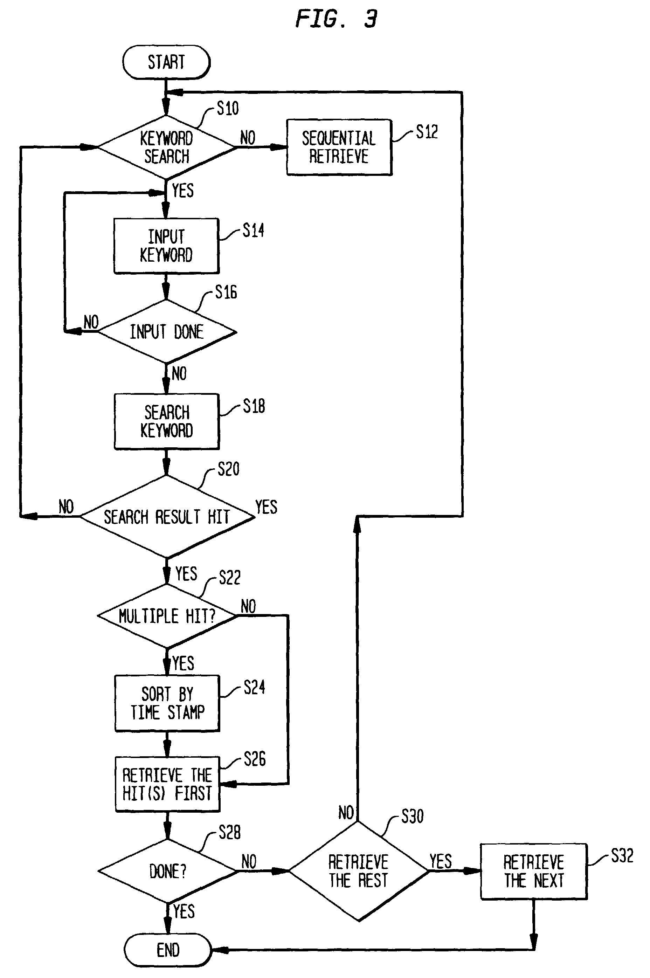

Referring to Figure 3, an alternative process of retrieving keyword-searched voice mail message(s) according to the current invention involves an alternative step S31 of going back to step S10 to repeat the above-described steps S10 through S28. A step S32 alternatively outputs the retrieved messages via an audio channel such as a speaker or a visual channel such as a display unit retrieves the voice mail messages for the user.

The embodiments described above are examples of the principles that may be used to implement the present invention. Those skilled in the art will be able to devise numerous arrangements which, although not explicitly shown or described herein, nevertheless embody those principles that are within the spirit and scope of the present invention.

## Claims

1. A method of retrieving a voice mail message from a memory containing data corresponding to one or more voice mail messages, comprising the steps of:
a) receiving as input a representation of a spoken keyword;
b) searching for one or more matches to the keyword in the data; and
c) outputting an indication of one or more voice mail messages containing a match to the keyword.

2. The method of Claim 1 wherein the keyword and the data are in a digital format.

3. The method of Claim 1 wherein the outputting step comprises the step of playing the one or more voice mail messages.

4. The method of Claim 1 wherein the outputting step comprises the step of displaying text corresponding to the one or more voice mail messages.

5. The method of Claim 1 wherein the outputting step further comprises the step of sorting a plurality of voice mail messages containing a match to the keyword according to a user-defined order.

6. The method of Claim 1 wherein the searching step comprises the step of performing voice recognition analysis to identify the one or more matches.

7. The method of Claim 1 wherein the searching step comprises the step of performing pattern matching analysis to identify the one or more matches.

8. A system for retrieving a voice mail message comprising:
a data storage unit for storing a database representing one or more voice mail messages;
a voice data input/output (I/O) unit connected to said data storage unit for retrieving a desired voice mail message;
a voice mail searching unit connected to said voice data I/O unit for searching for the desired voice mail message based on a representation of a user-specified keyword;
a voice mail control unit connected to or distributed between said voice data I/O unit and said voice data searching unit for controlling said voice data I/O unit and said voice data searching unit, wherein:
said voice mail control unit prompts a user for the user-specified keyword;
said voice mail control unit outputs the user-specified keyword to said voice data searching unit; and
in response to said voice data searching unit, said voice mail control unit outputs the desired voice mail message.

9. The system according to Claim 8 wherein the database and the keyword are in a digital format.

10. The system according to Claim 8 wherein said voice mail control unit outputs an audio signal representing the desired voice mail message.

11. The system according to Claim 8 wherein said voice mail control unit outputs a visual signal representing text corresponding to the desired voice mail message.

12. The system according to Claim 8 wherein said voice mail control unit sorts a plurality of voice mail messages containing the keyword according to a user-defined order.

13. The system according to Claim 8 wherein said voice mail searching unit performs voice recognition analysis to identify the desired voice mail message.

14. The system according to Claim 8 wherein said voice mail searching unit performs pattern matching analysis to identify the desired voice mail message.

15. An apparatus for retrieving a voice mail message from a memory containing data corresponding to one or more voice mail messages, comprising:
a) means for receiving as input a representation of a spoken keyword;
b) means for searching for one or more matches to the keyword in the data; and
c) means for outputting an indication of one or more voice mail messages containing a match to the keyword.

16. The apparatus of Claim 15 wherein the keyword and the data are in a digital format.

17. The apparatus of Claim 15 wherein the outputting means plays the one or more voice mail messages.

18. The apparatus of Claim 15 wherein the outputting means displays text corresponding to the one or more voice mail messages.

19. The apparatus of Claim 15 wherein the outputting means sorts a plurality of voice mail messages containing a match to the keyword according to a user-defined order.

20. The apparatus of Claim 15 wherein the searching means performs voice recognition analysis to identify the one or more matches.

21. The apparatus of Claim 15 wherein the searching means performs pattern matching analysis to identify the one or more matches.
